# EUROPEAN PATENT APPLICATION

(11) **EP 1 526 704 A1**
(43) Date of publication of application: **27.04.2005**
(21) Application number: 03078319.5
(22) Date of filing: 20.10.2003
(51) Int. Cl.: H04M 3/38, H04M 7/00

(54) **Control of a telephone switching system over the Internet**

(71) Applicant: Nederlandse Organisatie voor Toegepast-Natuurwetenschappelijk Onderzoek TNO, 2628 VK Delft (NL)
(72) Inventor: Meijer, Robert Johan, 9203 LS Drachten (NL)
(74) Representative: Prins, Adrianus Willem, Mr. Ir.

(57) **Abstract**

Method and means for processing a call from a first address (3) of a telephony network (1), assigned to a first user. The first user inputs a second address, assigned to a telephony network switch (2). The network switch transmits the first and/or the second network address to a process server (5) via a public data network (4), e.g. the internet. The process server retrieves, under control of the first and/or second address, call (control) data fit for controlling the network switch, and transmits those call data to the network switch, which processes and/or completes the call in accordance with the received call data. The call data may comprise a third network address, assigned to a second user. The call data may relate to the number of calls e.g. the total number of calls or the number of calls per time period. The relevant call data may comprise a first value when the number does not exceed a certain threshold value, or may comprise a second value when that number does exceed said threshold value. The network switch may connect then the originating address to the third network address (6) on reception of the call data comprising the first value or to a fourth network address (8) on reception of the call data comprising the second value.

## Description

### FIELD OF THE INVENTION

The present invention relates to a method and means for advanced telephony.

### BACKGROUND OF THE INVENTION

The present patent application may be seen as a continuation and/or exploration of the subject matter of a previous patent application, EP02077354, filed by the same applicant. Said previous application discloses a method and means for interconnecting a public telephony network and a public data network like the internet, thus enabling the telephone network to be controlled by internet servers and/or vice versa.

### SUMMARY OF THE INVENTION

According to the present invention a method is provided for processing a call from a first address of a telephony network, assigned to a first user, wherein the first user enters a second address, e.g. telephone number, into the telephony network, which second address is assigned to a telephony network switch which is connected or connectable to a process server via a public data network, e.g. the internet (hereinafter the public data network often will be indicated as "the internet", being the most popular example of a public data network at this moment).

The internet process server retrieves, guided by the first and/or second telephony network address transmitted by the telephony network switch to the process server, one or more call parameters or call algorithms, hereinafter indicated as "call data" or "call control data", stored within the process server, which call data are fit to control or set the network switch in which way the call, originated by the first user, has to be processed further and/or completed. To that end the process server transmits the retrieved call data to the network switch via the public data network. Upon reception of the relevant call data from the internet processing server, the network switch processes and/or completes the call in accordance with those call data.

It is emphasized that the processing/completion call data, found by the processing server, are transmitted via the public data network or internet, and not via a (non-public) signalling network of the public telephony network. Use of an internet server which is fit to control the telephone network and/or vice versa via the interconnection means as presented in said prior patent application, offers many opportunities for non-telephony service providers to integrate telephony and digital multimedia applications, e.g. restrictedly activatable telephony links in e.g. help texts or internet help pages of user services, software or hardware.

One of said call data may comprise a third network address, assigned to a second user, e.g. the telephone address of a help desk related to a certain service, software or hardware. As an option, the call data may relate to the number of calls originated from the first network address to the second network address, thus enabling restricted opportunities for e.g. personal help and/or advice after the purchase of hardware or software or a new subscription to a certain service. To that end the relevant call data may relate to the total number of calls (e.g. 3 free calls for help) or to the number of calls per time period (in other words, the call frequency), which item may be relevant for the work load or business model of the telephone help desk.

The call data relating to the number of calls may be given a first value (an "OK"-value) as long as the number does not exceed a certain threshold value, or is given a second value (a "NOK"-value) when that number does exceed said threshold value. The network switch may connect -after reception the relevant call data- the originating address to the third network address (e.g. the help desk telephone) on reception of the relevant call data having the first value ("OK"), while the network switch may simply abort the originating call or may -more user friendly- connect the originating address to a fourth network address on reception of the relevant call data having the second value ("NOK"). The fourth network address may e.g. be assigned to a voice response system which tells the originating caller that the call limit, set by the threshold value (e.g. three free calls or one free call a day), has been reached. As a different option the fourth network address may be assigned to another, (personal) third user.

The call data (parameters, algorithms etc.) may also include settings on e.g. the tariff which is applicable: e.g. three calls for help may be free of charge while further calls will be admitted, but not free of charge. Also the quality of the service level could be set by one of the call data: e.g. the first three calls will be routed to the help desk using a high priority, the next calls with a lower priority, etc.

Below an exemplary embodiment will be discussed of a system that is fit for execution the method discussed above.

### FIGURES

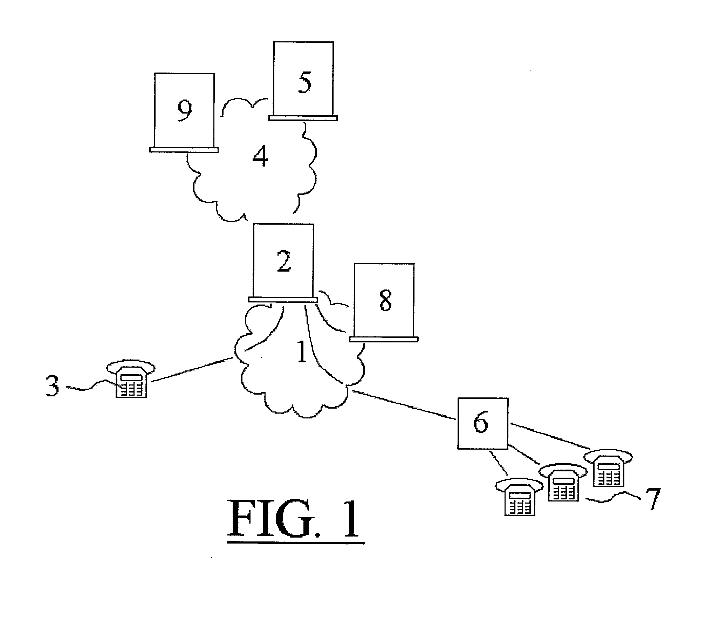

Figure 1 shows an exemplary embodiment of a system according to the invention.

### EXEMPLARY EMBODIMENTS

The exemplary system depicted in figure 1 comprises a telephone network 1, which -among several other switches, not shown- a network switch 2, which may be called by a first user terminal 3. The switch 2 is connected or connectable, via a public data network 4, e.g. the public IP based internet, with a processing server 5. By means of call data, to be retrieved in server 5, a call from user 3 may be routed to a call centre 6, which may distribute the call to one terminal 7, or, depending of the relevant call data values, to a voice response server 8. The call data the server 5 may -at least partly- be set from another internet server 9.

More in extension, the system is fit for processing a call from a first address 3 of a telephony network 1, assigned to a first user. The terminal 3 is fit for the first user to input, via a terminal keyboard, the address (telephone number) of the network switch 2, which transmits the caller's telephone number ("Calling Line Identifier", CLI) and/or the called switch node (the switch may comprise several network nodes having different network addresses or telephone numbers) to process server 5 via the internet 4. The process server comprises means (e.g. a database, not shown) for retrieving the relevant call data under control of the first and/or second address. Those call data are fit to control or to set the network switch to process and/or complete the call originated by the first user. The call data may be entered into server 5's database previously e.g. by another service provider 9, via the internet 4. Subsequently, the processing server 5 transmits the retrieved call data to the network switch 2 via the internet 4, and switch 2 processes and/or completes the call in accordance with the call data received from the process server 5.

One of said call data may comprise a third network address, assigned to a second user, e.g. the call centre or help desk 6/7.

The call data may relate to the number of calls originated from the first network address to the second network address, e.g. the total number of calls from the same call originator or the number of calls during a certain time period. To that end the processing server may comprise a register that counts the number of calls per first and/or second network address.

Moreover the processing server may comprise a threshold register and a comparator. The counting register, the threshold register and the comparator -which may implemented as software and/or hardware modules- serve for assigning to the relevant call data relating to the number of calls originated from the first network address and/or to the second network address a first ("OK") value when the number does not exceed a certain threshold value, or a second ("NOK") value when that number does exceed said threshold value.

The network switch, on receiving the relevant call data having the first value ("OK") will connect the originating, first network address of terminal 3 to the third network address: the network address of the call centre 6, thus connecting terminal 3 with one of the terminals 7, via the call distributor 6 and thus enabling that the user, via terminal 3 can consult one of the help desk members.

The network switch, however, on receiving the relevant call data having the second value ("NOK") due to passing the threshold value in the processing server 5, will disconnect the originating call or will connect the originating terminal 3 to a fourth network address, assigned to voice response system 8, which may output an automatic voice text comprising the message to the user of terminal 3 that he/she isn't allowed to get (free) access to helpdesk 6/7. Optionally, user 3 will, after having heard the message from voice response server 8, given an opportunity -e.g. by pressing a selection button-to be connected to the another network address, which may be part of the helpdesk 6/7, but which is not free of charge and will be billed accordingly.

Finally, below an example will be elaborated of the use of the present system. Suppose, the user of terminal 3 purchased a software game.

Suppose, before marketing a new computer game, a vendor contracts the service, enabled by server 8, requesting, e.g. via the vendor's server 9, a "Temporary Support Service" for his product. Server 5 starts by requesting a telephone number with the network switch 2. On reception of the requested telephone number, say 0900 123456, server 5 registers the telephone number in its database and transmits it to the vendor. The vendor now may refer to that telephone number in e.g. the game's manual in case that a customer needs telephonic help with e.g. installing or playing the computer game. Further, the vendor transmits relevant call data to server 5, e.g. comprising that a new buyer of the game is allowed to call three free calls to the help desk.

A user, having bought his/her new game is asked to register the newly bought game and to submit his/her telephone number, say 050 582 1116, which allows him/her to get three consults by telephone for free. Registering enables the server 5 to store the buyer's telephone number in the database. So, per buyer, the buyer's (first) network address (050 582 1116), the relevant (second) switch address (0900 123456), the (third) network address of its help desk (e.g. 070 1357913) and the maximum number of (free) calls (3 times) has been registered in server 5's database.

If the buyer needs telephonic consult he/she will call the telephone number 0900 123456, stated in the game's manual, originating a call from his/her network address to the network switch's network address. The network switch 2 transmits the originating network address 050 582 1116 and the called network address 0900 123456 to the process server 5 via internet connection 4. The process server 5 retrieves, in its database, the call data which match with both telephone numbers 050 582 1116 and 0900 123456 and finds that user 3 has the right to get access to the help desk's telephone number 070 1357913 for a maximum of three times.

The process server 5 also comprises a counter which registers the number of support calls to telephone number 070 1357913 and the database comprises a field in which the number of support calls already made can be registered.

When the process server 5 calculates that the number of support calls already done does not pass the maximum threshold value of three, a connect request is transmitted to the network switch 2, comprising the originating caller's telephone number 050 582 1116 and the help desk's telephone number 070 1357913, via the internet. On reception of the connect request the network switch 2 will connect the caller's number 050 582 1116 and the help desk's number 070 1357913.

When the process server 5 calculates that the number of support calls already done will pass the maximum threshold value of three, an "abort originating call" request or -preferably- a connect request is transmitted to the network switch 2 via the internet, comprising the originating caller's telephone number 050 582 1116 and the address of e.g. a voice message service 8. On reception of the connect request the network switch 2 will connect the caller's number 050 582 1116 to the voice message service 8, which tells the caller that the called telephone number 0900 123456 is no more active. The voice service 8 may be a voice response service, which is fit to transfer the user's call - depending on the caller's input- to another telephone address, which may be not free of charge.

It is noted that more servers 5 and/or servers 9 may be connected to the switch 2 via the internet 4, which makes the switch 2 able to serve various servers 5 and/or 9 respectively in a simultaneous way.

## Claims

1. Method for processing a call from a first address (3) of a telephony network (1), assigned to a first user, the method comprising next steps:
- the first user inputs a second address into the telephony network, the second address being assigned to a telephony network switch (2);
- the network switch transmits the first and/or the second network address to a process server (5) via a public data network (4);
- the process server retrieves, under control of the first and/or second address, call data which are fit for setting the network switch to process and/or complete the call originated by the first user, and transmits those retrieved call data to the network switch; the network switch processes and/or completes the call in accordance with the call data received from the process server.

2. Method according to claim 2, wherein said call data comprise a third network address, assigned to a second user.

3. Method according to claim 1, wherein said call data relate to the number of calls originated from the first network address to the second network address.

4. Method according to claim 3, wherein the relevant call data relate to the total number of calls.

5. Method according to claim 3, wherein the relevant call data relate to the number of calls per time period.

6. Method according to claim 3, wherein the relevant call data relate to the number of calls originated from the first network address to the second network address is given a first value when the number does not exceed a certain threshold value, or is given a second value when that number does exceed said threshold value.

7. Method according to claim 6, wherein the network switch connects the originating address to the third network address (6) on reception of the relevant call data comprising said first value.

8. Method according to claim 6, wherein the network switch connects the originating address to a fourth network address (8) on reception of the relevant call data comprising said second value.

9. Method according to claim 8, the fourth network address being assigned to a voice response system.

10. Method according to claim 8, the fourth network address being assigned to a third user.

11. System for processing a call from a first address of a telephony network, assigned to a first user, the system comprising means fit for the first user to input a second address into the telephony network, the second address being assigned to a telephony network switch which is fit to transmit the first and/or the second network address to a process server via a public data network, the process server comprising means for retrieving, under control of the first and/or second address, call data which are fit to control the network switch to process and/or complete the call originated by the first user, and means for transmitting those retrieved call data to the network switch, which is enabled to process and/or complete the call in accordance with the call data received from the process server.

12. System according to claim 11, wherein said call data comprise a third network address, assigned to a second user.

13. System according to claim 12, wherein said call data relate to the number of calls originated from the first network address to the second network address.

14. System according to claim 13, wherein the relevant call data relate to the total number of calls.

15. System according to claim 13, wherein the relevant call data relate to the number of calls per time period.

16. System according to claim 13, comprising means for assigning to the relevant call data relating to the number of calls originated from the first network address to the second network address a first value when the number does not exceed a certain threshold value, or a second value when that number does exceed said threshold value.

17. System according to claim 16, wherein the network switch is fit to connect the originating address to the third network address on reception of the relevant call data comprising said first value.

18. System according to claim 16, wherein the network switch is fit to connect the originating address to a fourth network address on reception of the relevant call data comprising said second value.

19. System according to claim 18, the fourth network address being assigned to a voice response system.

20. System according to claim 18, the fourth network address being assigned to a third user.

21. Process server comprising means for storing call data fit to control a network switch of a telephony network to process and/or complete a call from a first address of that telephony network, assigned to a first telephony network user, to a second address of the telephony network, assigned to said telephony network switch, the process server comprising means for receiving from said network switch, via a public data network, the relevant first and/or second telephony network address, and means for retrieving said call data assigned to said received first and/or second telephony network address, and means for transmitting those retrieved call data, via said public data network, to the network switch to process and/or complete the call in accordance with those call data received.

22. Process server according to claim 21, wherein said call data comprise a third network address, assigned to a second user.

23. Process server according to claim 21, wherein said call data relate to the number of calls originated from the first network address to the second network address.

24. Process server according to claim 23, wherein the relevant call data relate to the total number of calls.

25. Process server according to claim 23, wherein the relevant call data relate to the number of calls per time period.

26. Process server according to claim 23, comprising means for assigning to the relevant call data relating to the number of calls originated from the first network address to the second network address a first value when the number does not exceed a certain threshold value, or a second value when that number does exceed said threshold value.

27. Network switch for processing a call from a first address of a telephony network, assigned to a first user, to a second address of the telephony network, assigned to said network switch which is, moreover, fit to transmit the first and/or the second network address to a process server via a public data network, and to receive back from said process server call control data, the network switch being fit to control further processing and/or completing the call originated from the first network address in accordance with said call control data received from the process server.

28. Network switch according to claim 27, wherein the network switch is fit to connect the originating address to a third network address on reception of the relevant call control data having a first value, and to connect the originating address to a fourth network address on reception of the relevant call control data having a second value.
